# EUROPEAN PATENT APPLICATION

(11) **EP 4 239 567 A1**
(43) Date of publication of application: **06.09.2023**
(21) Application number: 20959843.2
(22) Date of filing: 30.10.2020
(51) Int. Cl.: G06T 7/00

(54) **AUTHENTICATION METHOD, CONTROL METHOD, INFORMATION PROCESSING DEVICE, AND AUTHENTICATION PROGRAM**

(71) Applicant: FUJITSU LIMITED, Kawasaki-shi, Kanagawa 211-8588 (JP)
(72) Inventor: OSAMURA, Kazuki, Kawasaki-shi, Kanagawa 211-8588 (JP); MAEDA, Satoshi, Kawasaki-shi, Kanagawa 211-8588 (JP); FUJII, Akira, Kawasaki-shi, Kanagawa 211-8588 (JP); NAGAO, Eiji, Kawasaki-shi, Kanagawa 211-8588 (JP); NISHIDA, Yoshihiko, Kawasaki-shi, Kanagawa 211-8588 (JP)
(74) Representative: Hoffmann Eitle
(86) International application number: PCT/JP2020/040764
(87) International publication number: WO 2022/091325

(57) **Abstract**

A computer extracts one or more registrants from among a plurality of registrants based on first biometric information detected by a first sensor. The computer acquires attribute information associated with each of the extracted one or more registrants from among attribute information associated with each of the plurality of registrants, and outputs information in a mode corresponding to the attribute information associated with each of the one or more registrants. The computer performs authentication for second biometric information detected by a second sensor according to output of the information by using the second biometric information and registered biometric information associated with each of the one or more registrants.

## Description

### TECHNICAL FIELD

The present invention relates to an authentication technique.

### BACKGROUND ART

Biometric authentication is a technique for performing identity verification using biometric features such as fingerprints, palm prints, veins, and faces. In the biometric authentication, a biometric feature acquired from an authentication subject is compared (collated) with a biometric feature of a registrant registered in advance in the registration template, and authentication of the authentication subject is performed based on a comparison result indicating whether or not these biometric features match.

The biometric authentication is used in various fields such as automated teller machines (ATMs) at banks and entrance and exit management, and particularly in recent years, the biometric authentication has started to be used for cashless payment at stores such as supermarkets and convenience stores.

To identify a customer who enters a store or the like, a multi-authentication technique using both face authentication and palm vein authentication may be applied. In this multi-authentication technique, face authentication narrows down registrants from a face image of a person photographed by a camera installed in the entrance gate, and the person is identified from among the narrowed down registrants using a palm vein image.

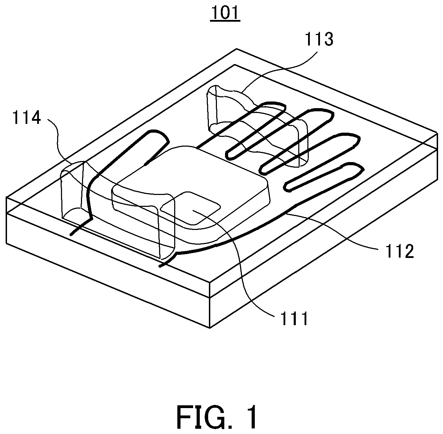

Fig. 1 illustrates an example of a biometric authentication device that acquires a vein image of a palm. A biometric authentication device 101 of Fig. 1 includes a vein sensor 111, a silhouette light emitting unit 112 having the shape of a hand, a finger guide unit 113, and a wrist guide unit 114.

When the authentication subject hovers his/her hand over the vein sensor 111, a vein image of the palm of the authentication subject is acquired. An upper portion of the biometric authentication device 101 is a transparent layer, and the silhouette light emitting unit 112 is disposed below the transparent layer. The silhouette light emitting unit 112 includes a plurality of light emitting diodes (LEDs). Providing the finger guide unit 113 and the wrist guide unit 114 allows the hand of the authentication subject to be guided to a correct height and position.

In relation to the biometric authentication, a personal authentication device capable of simultaneously lowering both an authentic person rejection rate and a false person acceptance rate is known (see, for example, Patent Document 1). A biometric authentication device capable of intuitively guiding a biometric authentication part is also known (see, for example, Patent Document 2).

### PRIOR ART DOCUMENTS

### PATENT DOCUMENT

Patent Document 1: Japanese Laid-open Patent Publication No. 2018-10393
Patent Document 2: International Publication Pamphlet No. WO 2012/014304

### SUMMARY OF THE INVENTION

### PROBLEMS TO BE SOLVED BY THE INVENTION

In the biometric authentication device 101 illustrated in Fig. 1, the hand of the authentication subject is fixed at the correct height and position by bringing the hand into contact with the finger guide unit 113 and the wrist guide unit 114.

Meanwhile, touchless technology in which the authentication subject does not contact anything to avoid infection with the new coronavirus or the like has attracted attention in today's society. It is thus desirable to remove the finger guide unit 113 and the wrist guide unit 114 from the biometric authentication device 101 and output some information for guiding the palm to the appropriate height and position.

However, when information suitable for an attribute of the authentication subject is not output, it may take time for the authentication subject to move his/her palm to the correct height, and thus the authentication time for the palm vein authentication may increase.

Such a problem occurs not only in a case where the authentication subject is authenticated using the vein image of the palm but also in a case where the authentication subject is authenticated using another biometric information.

In one aspect, an object of the present invention is to shorten the authentication time of biometric authentication involving the output of the information to the authentication subject.

### MEANS FOR SOLVING THE PROBLEMS

In one idea, a computer extracts one or more registrants from among a plurality of registrants based on first biometric information detected by a first sensor. The computer acquires attribute information associated with each of the extracted one or more registrants from among attribute information associated with each of the plurality of registrants, and outputs information in a mode corresponding to the attribute information associated with each of the one or more registrants.

The computer performs authentication for second biometric information detected by a second sensor according to output of the information by using the second biometric information and registered biometric information associated with each of the one or more registrants.

### EFFECT OF THE INVENTION

According to one aspect, it is possible to shorten the authentication time of biometric authentication involving the output of the information to the authentication subject.

### BRIEF DESCRIPTION OF DRAWINGS

Fig. 1 is a view illustrating a biometric authentication device that acquires a vein image of a palm.
Fig. 2 is a view illustrating a biometric authentication device that guides a palm with light guide.
Fig. 3 is a diagram illustrating light guide used in the biometric authentication device.
Fig. 4 is a diagram illustrating two types of light guide.
Fig. 5 is a functional configuration diagram of an information processing device.
Fig. 6 is a flowchart of biometric authentication processing.
Fig. 7 is a configuration diagram of a biometric authentication system.
Fig. 8 is a configuration diagram of a first biometric authentication device.
Fig. 9 is a functional configuration diagram of a server.
Fig. 10 is a view illustrating an external distance sensor.
Fig. 11 is a view illustrating a positional relationship between a hand and a biometric authentication device in a vertical direction.
Fig. 12 is a diagram illustrating a candidate list.
Fig. 13 is a diagram illustrating light guide used in the biometric authentication system.
Fig. 14 is a flowchart of biometric authentication processing performed by the server.
Fig. 15 is a flowchart of attribute information selection processing.
Fig. 16 is a configuration diagram of a second biometric authentication device.
Fig. 17 is a diagram illustrating light guide determined according to distance information.
Fig. 18 is a hardware configuration diagram of the information processing device.

### DESCRIPTION OF EMBODIMENTS

Hereinafter, embodiments will be described in detail with reference to the drawings.

As information for guiding a palm of an authentication subject to an appropriate height and position in palm vein authentication, light, sound, text message, voice message, and the like can be used.

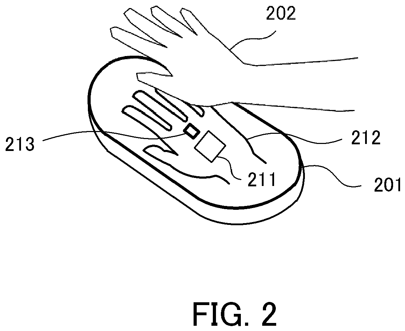

Fig. 2 illustrates an example of a biometric authentication device that guides the palm with light guide. A biometric authentication device 201 of Fig. 2 includes a vein sensor 211, a silhouette light emitting unit 212, and a distance sensor 213. The distance sensor 213 measures the height of a palm 202 hovered over the vein sensor 211.

The silhouette light emitting unit 212 includes blue, green, red, and white LEDs disposed along the shape of a hand. The silhouette light emitting unit 212 presents information on the height of the palm 202 to the authentication subject by changing the emission color according to the height measured by the distance sensor 213.

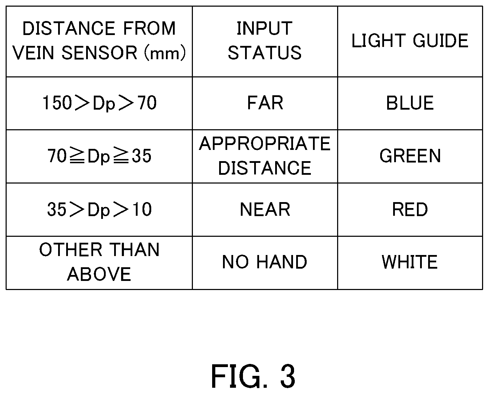

Fig. 3 illustrates an example of light guide used in the biometric authentication device 201 of Fig. 2. Dp represents a distance from the vein sensor 211 to the palm 202 as measured by the distance sensor 213. The input status represents an evaluation on a position of the palm 202 and the light guide represents the emission color of the silhouette light emitting unit 212.

When Dp is shorter than 150 mm and longer than 70 mm, the input status is "far" and the light guide is "blue". In this case, the silhouette light emitting unit 212 emits blue light. When Dp is equal to or shorter than 70 mm and is equal to or longer than 35 mm, the input status is "appropriate distance" and the light guide is "green". In this case, the silhouette light emitting unit 212 emits green light. The range of "appropriate distance" varies according to the specification of the vein sensor 211.

When Dp is shorter than 35 mm and longer than 10 mm, the input status is "near" and the light guide is "red". In this case, the silhouette light emitting unit 212 emits red light. When Dp is a value other than the above, the input status is "no hand", and the light guide is "white". In this case, the silhouette light emitting unit 212 emits white light.

"Appropriate distance" indicates a situation in which the palm 202 is present at a height suitable for processing of acquiring a vein image of the palm. "Far" indicates a situation in which the palm 202 is present at a position higher than the upper limit of the appropriate distance. "Near" indicates a situation in which the palm 202 is present at a position lower than the lower limit of the appropriate distance. "No hand" indicates a situation in which the palm 202 is not hovered over the vein sensor 211.

When the silhouette light emitting unit 212 emits the blue light, the authentication subject moves the palm 202 close to the vein sensor 211, and when the silhouette light emitting unit 212 emits the red light, the authentication subject moves the palm 202 away from the vein sensor 211. When the silhouette light emitting unit 212 emits the green light, the authentication subject stops the palm 202, so that the vein sensor 211 acquires the vein image of the palm 202. Then, palm vein authentication is performed using the acquired vein image.

According to the light guide of Fig. 3, the information indicating the height of the palm is correctly fed back to the authentication subject. As a result, the authentication subject can move his/her palm to a correct height in a short time, and thus the authentication time for the palm vein authentication is shortened.

However, if the authentication subject is color-weak, it is difficult for him/her to distinguish between "green" and "red" in the light guide of Fig. 3, and whether the input situation is "appropriate distance" or "near" is not correctly fed back. In this case, it takes time for the authentication subject to move his/her palm to the correct height, and thus the authentication time for the palm vein authentication increases. In addition, if the palm is not hovered at the correct height, an unclear vein image may be acquired, and thus the authentication accuracy may decrease.

On the other hand, when the authentication subject has normal color vision, it is preferable to use the light guide of Fig. 3. Therefore, a method that uses both the light guide for the authentication subject having normal color vision and the light guide for the color-weak authentication subject is effective.

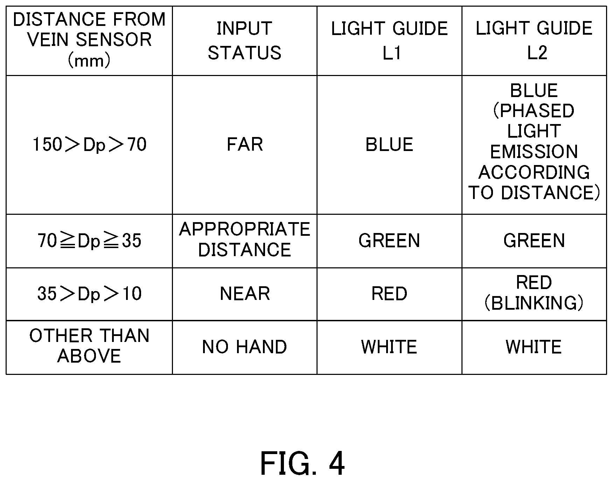

Fig. 4 illustrates an example of two types of light guide. Light guide L1 is light guide for the authentication subject having normal color vision, and corresponds to the light guide of Fig. 3. Light guide L2 is light guide for the color-weak authentication subject.

When the input status is "far", the light guide L2 is "blue (phased light emission according to distance)". In this case, the silhouette light emitting unit 212 changes the intensity of the blue light in a phased manner according to Dp. For example, the silhouette light emitting unit 212 increases the intensity of the blue light by causing more blue LEDs to emit light as Dp becomes shorter.

When the input status is "appropriate distance", the light guide L2 is "green". In this case, the silhouette light emitting unit 212 emits green light, as in the light guide L1. When the input status is "near", the light guide L2 is "red (blinking)". In this case, the silhouette light emitting unit 212 blinks the red light. When the input status is "no hand", the light guide L2 is "white". In this case, the silhouette light emitting unit 212 emits white light, as in the light guide L1.

As described above, using the light guide that not only changes the emission color but also changes the light intensity and the light emission time makes it possible to feed back the correct input status to the color-weak authentication subject. However, if an inquiry is made to all the authentication subjects to check whether or not the authentication subjects are color-weak, it impairs the usability of the biometric authentication device 201.

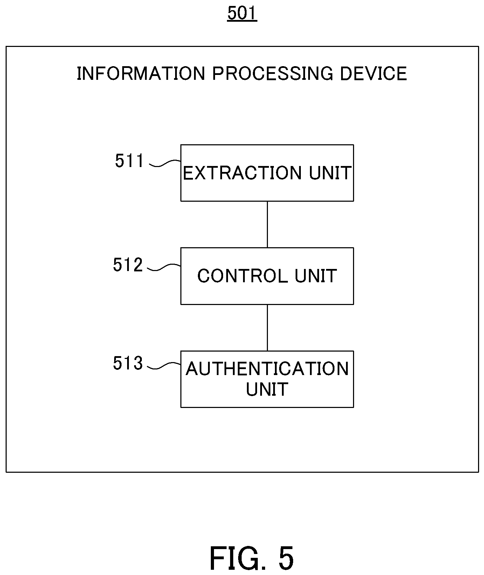

Fig. 5 illustrates a functional configuration example of an information processing device (computer) according to the embodiment. The information processing device 501 of Fig. 5 includes an extraction unit 511, a control unit 512, and an authentication unit 513.

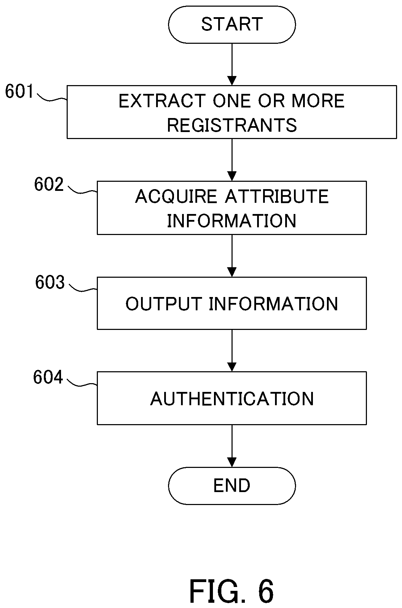

Fig. 6 is a flowchart illustrating an example of biometric authentication processing performed by the information processing device 501 of Fig. 5. First, the extraction unit 511 extracts one or more registrants from among a plurality of registrants based on first biometric information detected by a first sensor (step 601). Then, the extraction unit 511 acquires attribute information associated with each of the extracted one or more registrants from among attribute information associated with each of the plurality of registrants (step 602).

Next, the control unit 512 outputs information in a mode corresponding to the attribute information associated with each of the one or more registrants (step 603) . Then, the authentication unit 513 performs authentication for second biometric information detected by a second sensor according to output of the information by using the second biometric information and registered biometric information associated with each of the one or more registrants (step 604).

According to the information processing device 501 of Fig. 5, it is possible to shorten the authentication time of biometric authentication involving the output of the information to the authentication subject.

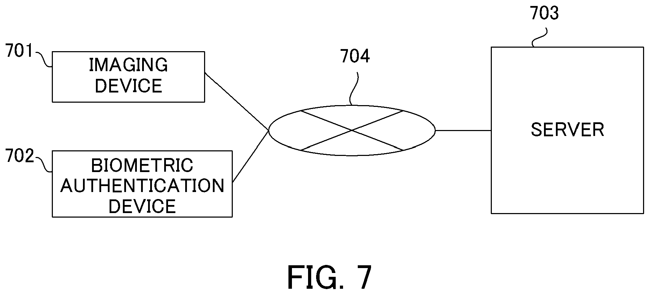

Fig. 7 illustrates a configuration example of a biometric authentication system including the information processing device 501 of Fig. 5. The biometric authentication system of Fig. 7 includes an imaging device 701, a biometric authentication device 702, and a server 703, and is used in a financial processing system of a financial institution, an entrance/exit management system, a settlement system of a retail store, and the like. The imaging device 701 and the biometric authentication device 702 are installed at a place where biometric authentication is performed on the authentication subject. The server 703 corresponds to the information processing device 501 of Fig. 5.

The server 703 can communicate with the imaging device 701 and the biometric authentication device 702 via a communication network 704. The communication network 704 is a local area network (LAN) or a wide area network (WAN).

The imaging device 701 is, for example, a camera having an imaging element such as a charge-coupled device (CCD) or a complementary metal-oxide-semiconductor (CMOS), and photographs a face image of the authentication subject and transmits the face image to the server 703. The imaging device 701 is an example of the first sensor, and the face image is an example of the first biometric information detected by the first sensor.

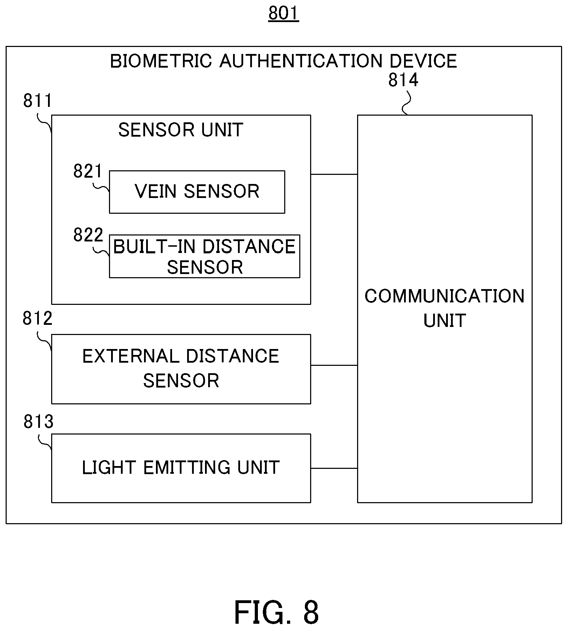

Fig. 8 illustrates a configuration example of a first biometric authentication device used as the biometric authentication device 702 of Fig. 7. A biometric authentication device 801 of Fig. 8 includes a sensor unit 811, an external distance sensor 812, a light emitting unit 813, and a communication unit 814. The sensor unit 811 includes a vein sensor 821 and a built-in distance sensor 822.

When the authentication subject hovers his/her hand over the biometric authentication device 702, the built-in distance sensor 822 and the external distance sensor 812 measure the distance from the sensor unit 811 to the palm. The built-in distance sensor 822 outputs distance information indicating a category of the measured distance. As the category of the distance, for example, "far", "appropriate distance", "near", or "no hand" is used. As the built-in distance sensor 822, for example, the distance sensor described in Patent Document 2 can be used. The external distance sensor 812 outputs a distance value indicating the measured distance.

The communication unit 814 transmits the distance value output from the external distance sensor 812 to the server 703. Then, the communication unit 814 receives from the server 703 a control signal indicating a light emission mode corresponding to the transmitted distance value.

The light emitting unit 813, for example, corresponds to the silhouette light emitting unit 212 of Fig. 2 and includes blue, green, red, and white LEDs disposed along the shape of the hand. The light emitting unit 813 emits light in the light emission mode indicated by the received control signal to present information on the height of the palm to the authentication subject. The light emission mode represents a light emission color, light intensity, light emission time, and the like.

The authentication subject changes the height of the palm according to the light emission mode of the light emitting unit 813, and stops the palm at the appropriate distance. The vein sensor 821 detects the vein image of the palm by irradiating the palm of the authentication subject with near infrared rays or the like and photographing a blood vessel or the like inside the hand. The communication unit 814 transmits the vein image detected by the vein sensor 821 to the server 703.

The vein sensor 821 is an example of the second sensor, and the vein image of the palm is an example of the second biometric information detected by the second sensor. The palm of the authentication subject is an example of a biological body, and the vein sensor 821 is an example of the biometric sensor.

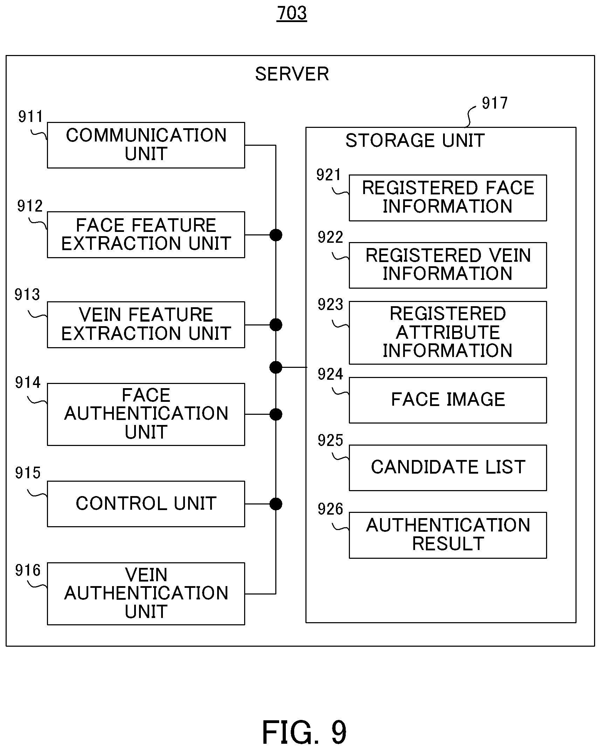

Fig. 9 illustrates a functional configuration example of the server 703 of Fig. 7. The server 703 of Fig. 9 includes a communication unit 911, a face feature extraction unit 912, a vein feature extraction unit 913, a face authentication unit 914, a control unit 915, a vein authentication unit 916, and a storage unit 917. The face authentication unit 914 and the control unit 915 correspond to the extraction unit 511 and the control unit 512 of Fig. 5, respectively, and the vein feature extraction unit 913 and the vein authentication unit 916 correspond to the authentication unit 513 of Fig. 5.

The storage unit 917 stores registered face information 921, registered vein information 922, and registered attribute information 923 of each of a plurality of persons who are the registrants. The registered face information 921 of each person includes a user ID and a face feature amount of the person. The face feature amount corresponds to a biometric feature and is information indicating a feature of the face image.

As the face feature amount, for example, a Histograms of Oriented Gradients (HOG) feature amount, a Scaled Invariance Feature Transform (SIFT) feature amount, or a Speeded-Up Robust Features (SURF) feature amount can be used. The face feature amount may be a Binary Robust Independent Elementary Features (BRIEF) feature amount or saliency.

The registered vein information 922 of each person includes the user ID and a vein feature amount of the person. The vein feature amount corresponds to a biometric feature and is information indicating a feature of the vein image of the palm. The registered attribute information 923 includes the user ID and the attribute information of the person. The attribute information is information indicating color vision.

The face feature amount included in the registered face information 921 of each person, the vein feature amount included in the registered vein information 922 of each person, and the attribute information included in the registered attribute information 923 of each person are associated with each other via the user ID.

The communication unit 911 receives the face image of the authentication subject from the imaging device 701 and receives the distance value from the biometric authentication device 801. The face feature extraction unit 912 stores the received face image as a face image 924 in the storage unit 917, and extracts the face feature amount from the face image 924.

The face authentication unit 914 performs face authentication on the face image 924 by comparing the extracted face feature amount with the registered face information 921 of each person. The face authentication unit 914, for example, calculates similarity between the extracted face feature amount and the face feature amount included in the registered face information 921 of each person, and selects N (N is an integer of 1 or more) pieces of the registered face information 921 in descending order of similarity.

Next, the face authentication unit 914 acquires the attribute information associated with a user ID of the selected registered face information 921 from the registered attribute information 923 corresponding to the user ID. Then, the face authentication unit 914 generates a candidate list 925 including N pieces of user IDs and attribute information associated with each user ID, and stores the generated candidate list 925 in the storage unit 917.

The candidate list 925 indicates registrants narrowed down using the face image 924, and each registrant corresponds to a candidate of the authentication subject. The N pieces of user IDs and attribute information included in the candidate list 925 are sorted in descending order of similarity.

The control unit 915 selects the attribute information corresponding to any one of the user IDs from the candidate list 925, and determines the light emission mode of the light emitting unit 813 according to the selected attribute information and the distance value received from the biometric authentication device 801. Then, the control unit 915 transmits the control signal indicating the determined light emission mode to the biometric authentication device 801 via the communication unit 911. As a result, the light emitting unit 813 emits light in the light emission mode corresponding to the attribute information and the distance value.

By selecting any one of the registrants narrowed down based on the similarity of the face feature amounts and acquiring the attribute information of the selected registrant, it is possible to identify the attribute information having a high possibility of corresponding to the attribute information of the authentication subject. This makes it possible to select the light emission mode suitable for color vision of the authentication subject.

Next, the communication unit 911 receives the vein image detected by the vein sensor 821, and the vein feature extraction unit 913 extracts the vein feature amount from the received vein image. The vein authentication unit 916 performs palm vein authentication by comparing the extracted vein feature amount with the registered vein information 922 corresponding to the selected attribute information.

The vein authentication unit 916, for example, calculates similarity between the extracted vein feature amount and the vein feature amount included in the registered vein information 922, and compares the calculated similarity with a threshold. When the similarity is greater than the threshold, the vein authentication unit 916 generates an authentication result 926 indicating authentication success and stores the authentication result 926 in the storage unit 917. The authentication result 926 indicating the authentication success includes the user ID of the registered vein information 922 used for similarity calculation. On the other hand, when the similarity is equal to or less than the threshold, the vein authentication unit 916 generates an authentication result 926 indicating authentication failure and stores the authentication result 926 in the storage unit 917.

For example, when the authentication succeeds in the entrance/exit management system, control for opening the gate is performed based on the authentication result 926 indicating authentication success.

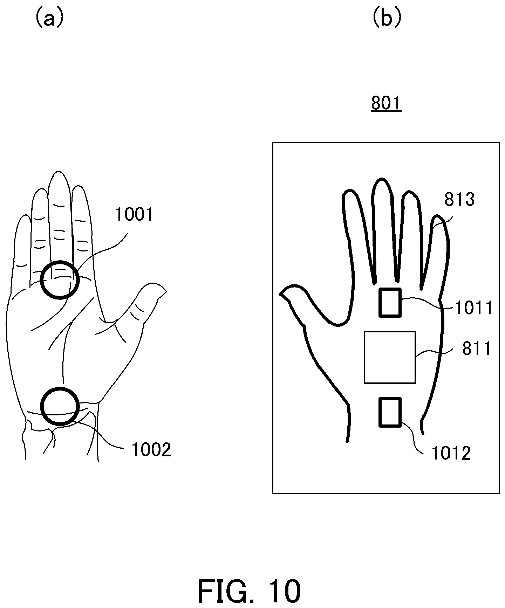

Fig. 10 illustrates a specific example of the external distance sensor 812 in the biometric authentication device 801 of Fig. 8. Fig. 10(a) illustrates an example of a hand hovered over the biometric authentication device 801, and Fig. 10(b) illustrates an example of an upper surface of the biometric authentication device 801.

The sensor unit 811, the light emitting unit 813, a distance sensor 1011, and a distance sensor 1012 are disposed on the upper surface of the biometric authentication device 801. The sensor unit 811 is disposed at a position facing the center of the palm. The shape of the light emitting unit 813 is a hand shape. The distance sensor 1011 and the distance sensor 1012 correspond to the external distance sensor 812 of Fig. 8.

The distance sensor 1011 and the distance sensor 1012 are disposed outside the sensor unit 811 so as to avoid the center of the palm to prevent overlap with reflected light of near infrared rays emitted from the vein sensor 821. The distance sensor 1011 is disposed at a position facing a middle finger base 1001, and the distance sensor 1012 is disposed at a position facing a wrist portion 1002.

The distance sensor 1011 and the distance sensor 1012 measure distances to the middle finger base 1001 and the wrist portion 1002, respectively, by emitting infrared rays, for example. In this case, an average value of the measured value of the distance sensor 1011 and the measured value of the distance sensor 1012 is used as a distance from the sensor unit 811 to the palm.

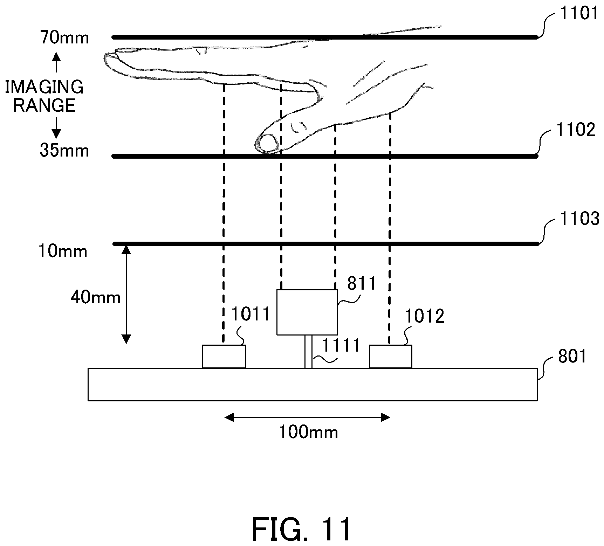

Fig. 11 illustrates an example of the positional relationship in the vertical direction between the hand of Fig. 10(a) and the biometric authentication device 801 of Fig. 10(b). The distance sensor 1011 and the distance sensor 1012 are disposed on both sides of the sensor unit 811 on the upper surface of the biometric authentication device 801. The distance sensor 1011 and the distance sensor 1012 are disposed away from each other by about 100 mm in the horizontal direction.

The minimum distance that can be measured by the built-in distance sensor 822 in the sensor unit 811 is about 10 mm, and the minimum distance that can be measured by the distance sensor 1011 and the distance sensor 1012 is about 40 mm. In this example, a spacer 1111 is inserted between the biometric authentication device 801 and the sensor unit 811 such that the position corresponding to the minimum distance that can be measured by the built-in distance sensor 822 coincides with the position corresponding to the minimum distance that can be measured by the distance sensor 1011 and the distance sensor 1012.

A straight line 1103 indicates a position corresponding to the minimum distance that can be measured by the built-in distance sensor 822, the distance sensor 1011, and the distance sensor 1012. The position indicated by the straight line 1103 is about 10 mm away from an upper surface of the sensor unit 811 in the vertical direction, and is about 40 mm away from upper surfaces of the distance sensor 1011 and the distance sensor 1012 in the vertical direction. A space above the straight line 1103 corresponds to distance measurement ranges of the built-in distance sensor 822, the distance sensor 1011, and the distance sensor 1012.

A straight line 1102 indicates a position about 35 mm away from the upper surface of the sensor unit 811 in the vertical direction, and a straight line 1101 indicates a position about 70 mm away from the upper surface of the sensor unit 811 in the vertical direction. A space between the straight line 1101 and the straight line 1102 corresponds to an imaging range of the vein sensor 821 in the sensor unit 811. When the palm is present in the imaging range, the input status is determined to be the "appropriate distance".

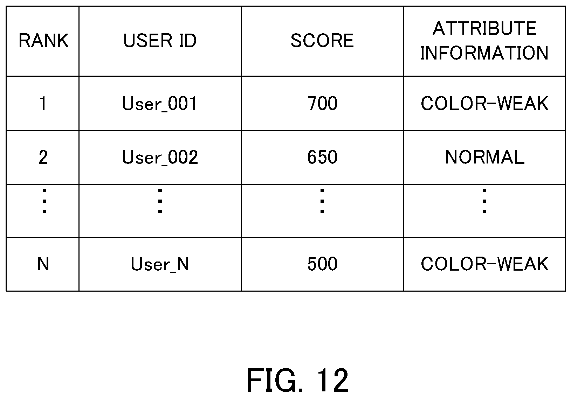

Fig. 12 illustrates an example of the candidate list 925 generated by the face authentication unit 914. The user ID is identification information of a user who is the registrant, and the score represents the similarity between the face feature amount of the authentication subject and the face feature amount included in the registered face information 921 of the user indicated by the user ID. The attribute information represents attribute information acquired from the registered attribute information 923 of the user indicated by the user ID. The attribute information of each user indicates whether the color vision is normal or color-weak. The rank indicates a result of sorting N pieces of the user IDs in descending order of scores.

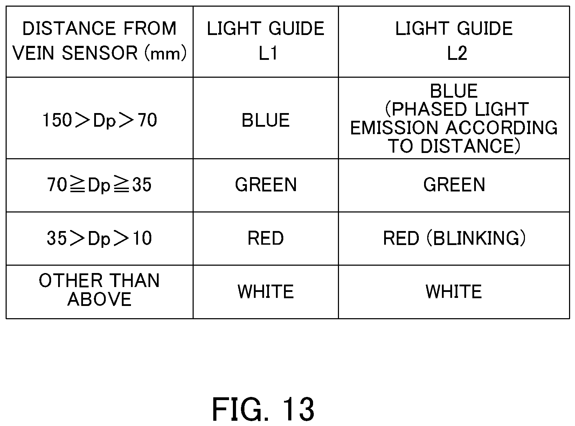

Fig. 13 illustrates an example of the light guide used in the biometric authentication device of Fig. 7. Dp represents the distance value received from the biometric authentication device 801, and the light guide L1 and the light guide L2 represent the light emission mode of the light emitting unit 813. The light guide L1 is light guide for the authentication subject having normal color vision, and the light guide L2 is light guide for the color-weak authentication subject.

The control unit 915 determines any one of the light emission modes according to the attribute information of any one of the users included in the candidate list 925 and the distance value received from the biometric authentication device 801.

When Dp is shorter than 150 mm and longer than 70 mm, the light guide L1 is "blue" and the light guide L2 is "blue (phased light emission according to distance)". When Dp is equal to or shorter than 70 mm and equal to or longer than 35 mm, the light guide L1 and the light guide L2 are "green". When Dp is shorter than 35 mm and longer than 10 mm, the light guide L1 is "red" and the light guide L2 is "red (blinking)". When Dp is a value other than the above, the light guide L1 and the light guide L2 are "white".

"Blue (phased light emission according to distance)" and "red (blinking)" are examples of a light emission mode that is easily visually recognized by a color-weak person.

For example, when the user of rank 1 in Fig. 12 is selected as the candidate for the authentication subject, the light guide L2 is selected because the attribute information of the user is color-weak. Thus, when Dp is shorter than 150 mm and longer than 70 mm, "blue (phased light emission according to distance)" is selected as the light emission mode. In this case, the light emitting unit 813 changes the intensity of the blue light in a phased manner according to Dp.

When Dp is shorter than 35 mm and longer than 10 mm, "red (blinking)" is selected as the light emission mode. In this case, the light emitting unit 813 blinks the red light. Even an authentication subject who finds it difficult to distinguish between "green" and "red" can easily distinguish between "green" and "red (blinking)". Thus, it is possible to correctly feed back the distance from the sensor unit 811 to the palm to the color-weak authentication subject.

According to the biometric authentication system of Fig. 7, it is possible to cause the light emitting unit 813 to emit light in a light emission mode suitable for the color vision of the candidate for the authentication subject by registering the attribute information indicating the color vision of each registrant. As a result, even the color-weak authentication subject can move his/her palm to the correct height in a short time because the information indicating the height of the palm is correctly fed back, thus shortening the authentication time of the palm vein authentication. In addition, hovering the palm at the correct height allows a clear vein image to be acquired, thus improving the authentication accuracy of the palm vein authentication.

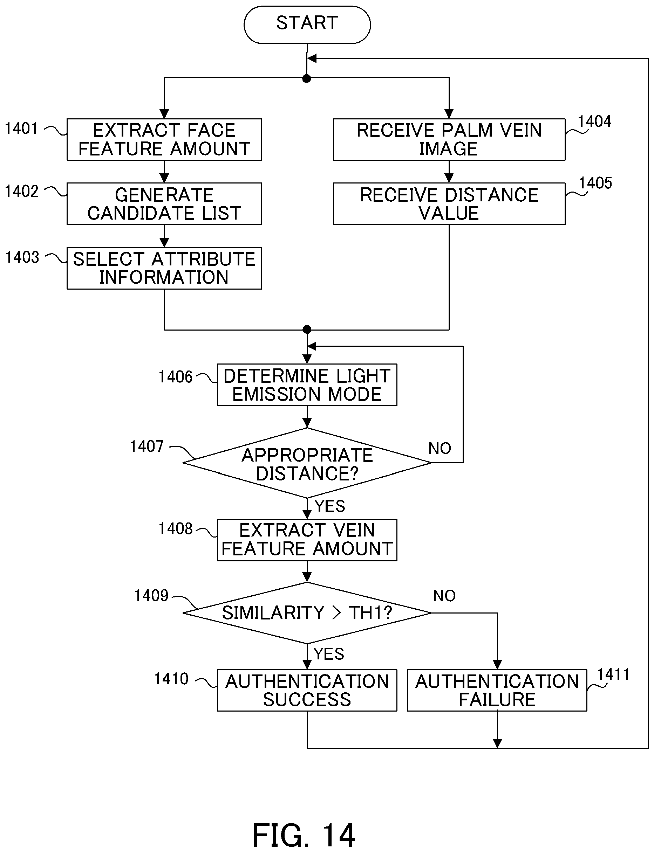

Fig. 14 is a flowchart illustrating an example of biometric authentication processing performed by the server 703 of Fig. 9. First, the communication unit 911 receives the face image of the authentication subject from the imaging device 701, and the face feature extraction unit 912 stores the received face image in the storage unit 917 as the face image 924. Then, the face feature extraction unit 912 extracts the face feature amount from the face image 924 (step 1401).

Next, the face authentication unit 914 performs face authentication using the extracted face feature amount, and selects N pieces of the registered face information 921 in descending order of similarity to the face feature amount, thereby generating the candidate list 925 including the N pieces of the user IDs and attribute information (step 1402) . Then, the control unit 915 selects the attribute information corresponding to any one of the user IDs from the candidate list 925 (step 1403).

In parallel with the processing of steps 1401 to 1403, the communication unit 911 receives the vein image of the palm of the authentication subject from the biometric authentication device 801 (step 1404). Then, the communication unit 911 receives the distance value measured by the external distance sensor 812 from the biometric authentication device 801 (step 1405).

Next, the control unit 915 determines the light emission mode of the light emitting unit 813 according to the selected attribute information and the distance value received from the biometric authentication device 801, and transmits the control signal indicating the determined light emission mode to the biometric authentication device 801 via the communication unit 911 (step 1406).

Next, the control unit 915 checks whether or not the received distance value is within the range of the appropriate distance (step 1407). For example, when the distance value is equal to or shorter than 70 mm and is equal to or longer than 35 mm, it is determined that the distance value is within the range of the appropriate distance, and in other cases, it is determined that the distance value is not within the range of the appropriate distance.

When the distance value is within the range of the appropriate distance (step 1407, YES), the vein feature extraction unit 913 extracts the vein feature amount from the received vein image (step 1408). Next, the vein authentication unit 916 acquires the vein feature amount from the registered vein information 922 corresponding to the user ID selected in step 1403. Then, the vein authentication unit 916 calculates the similarity between the vein feature amount extracted from the vein image and the vein feature amount acquired from the registered vein information 922, and compares the similarity with a threshold TH1 (step 1409).

When the similarity is greater than TH1 (step 1409, YES), the vein authentication unit 916 generates the authentication result 926 indicating authentication success (step 1410), and the server 703 repeats the processing of step 1401 and subsequent steps for the next authentication subject. On the other hand, when the similarity is equal to or less than TH1 (step 1409, NO), the vein authentication unit 916 generates the authentication result 926 indicating authentication failure (step 1411), and the server 703 repeats the processing of step 1401 and subsequent steps for the next authentication subject.

When the distance value is not within the range of the appropriate distance (step 1407, NO), the server 703 repeats the processing of step 1406 and subsequent steps. In this case, in step 1406, the light emitting unit 813 emits light in the light emission mode indicated by the control signal, and the authentication subject changes the height of his/her palm according to the light emission mode of the light emitting unit 813. Then, the communication unit 911 receives the vein image of the palm and the distance value from the biometric authentication device 801.

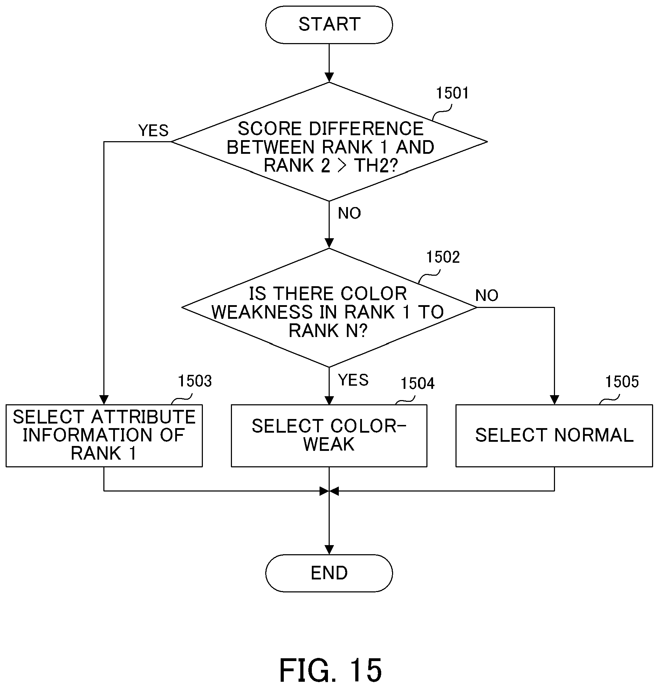

Fig. 15 is a flowchart illustrating an example of attribute information selection processing in step 1403 of Fig. 14. First, the control unit 915 calculates a difference (score difference) between the score of the user ID of rank 1 and the score of the user ID of rank 2 in the candidate list 925, and compares the score difference with a threshold TH2 (step 1501). The user ID of rank 1 indicates a user having the largest similarity of the face feature amount in the candidate list 925, and the user ID of rank 2 indicates a user having the second largest similarity of the face feature amount.

When the score difference is greater than TH2 (step 1501, YES), the control unit 915 selects the attribute information corresponding to the user ID of rank 1 (step 1503). When the score difference is equal to or less than TH2 (step 1501, NO), the control unit 915 checks whether or not there is color weakness in the attribute information of rank 1 to rank N in the candidate list 925 (step 1502).

When there is color weakness in the attribute information of rank 1 to rank N (step 1502, YES), the control unit 915 selects color-weak as the attribute information (step 1504). On the other hand, when there is no color weakness in the attribute information of rank 1 to rank N (step 1502, NO), the control unit 915 selects normal as the attribute information (step 1505).

According to the attribute information selection processing of Fig. 15, it is possible to preferentially select color-weak when the score difference between rank 1 and rank 2 is small. Note that, in step 1403 of Fig. 14, the control unit 915 may unconditionally select the attribute information corresponding to the user ID of rank 1 instead of performing the attribute information selection processing of Fig. 15.

In the biometric authentication processing of Fig. 14, palm vein authentication is performed by selecting any one of the users included in the candidate list 925, but it is also possible to perform the palm vein authentication by selecting a plurality of users.

For example, in step 1403, the server 703 may select the attribute information corresponding to the user IDs of rank 1 to M (M is an integer that is equal to or greater than 2 and equal to or less than N) from the candidate list 925. In this case, the server 703 performs the processing of steps 1406 to 1411 for each piece of the selected attribute information, and can include in the authentication result 926 the user ID having the highest similarity of the vein feature amount among the user IDs for which the authentication has succeeded.

In the biometric authentication system of Fig. 7, it is also possible to detect the biometric information of the authentication subject using another sensor instead of the imaging device 701. As another sensor, for example, a fingerprint sensor, a palm print sensor, a finger vein sensor, or the like can be used. The fingerprint sensor detects a fingerprint image as the biometric information, the palm print sensor detects a palm print image as the biometric information, and the finger vein sensor detects a vein image of a finger as the biometric information. In this case, the server 703 generates the candidate list 925 using biometric information detected by another sensor instead of the face image.

In the biometric authentication device 801 of Fig. 8, it is also possible to detect the biometric information of the authentication subject using another sensor instead of the vein sensor 821. As another sensor, for example, a fingerprint sensor, a palm print sensor, a finger vein sensor, or the like can be used. In this case, the server 703 performs the biometric authentication using biometric information detected by another sensor instead of the palm vein image.

The server 703 may also determine the light emission mode of the light emitting unit 813 using the distance information output from the built-in distance sensor 822 instead of the distance value output from the external distance sensor 812. In this case, the external distance sensor 812 may be omitted from the biometric authentication device 801.

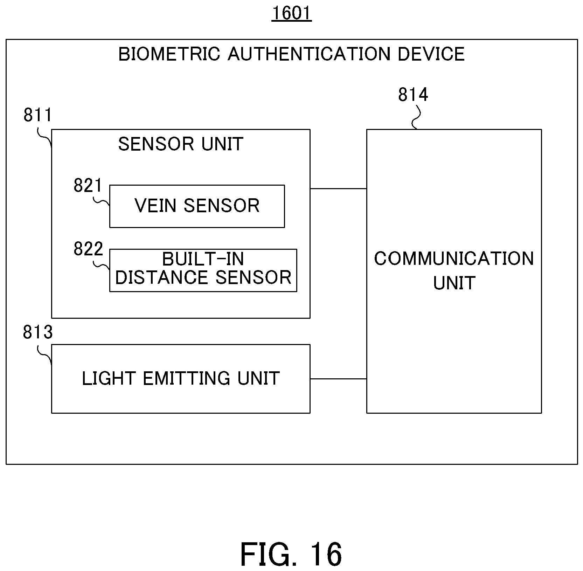

Fig. 16 illustrates a configuration example of a second biometric authentication device used as the biometric authentication device 702 of Fig. 7. A biometric authentication device 1601 of Fig. 16 has a configuration in which the external distance sensor 812 is removed from the biometric authentication device 801 of Fig. 8. The communication unit 814 transmits the distance information output from the built-in distance sensor 822 to the server 703. The distance information represents any one of the categories, for example, "far", "appropriate distance", "near", and "no hand".

The biometric authentication processing in the case of using the biometric authentication device 1601 instead of the biometric authentication device 801 is similar to the biometric authentication processing of Fig. 14. In this case, in step 1405, the communication unit 911 receives the distance information instead of the distance value from the biometric authentication device 1601.

Next, in step 1406, the control unit 915 determines the light emission mode of the light emitting unit 813 according to the selected attribute information and the distance information received from the biometric authentication device 1601. Then, in step 1407, the control unit 915 checks whether or not the distance information is "appropriate distance".

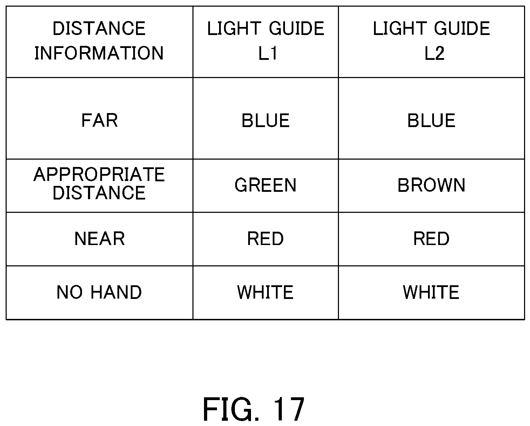

Fig. 17 illustrates an example of the light guide determined according to the distance information. The distance information represents the distance information received from the biometric authentication device 1601. The light guide L1 is light guide for the authentication subject having normal color vision, and the light guide L2 is light guide for the color-weak authentication subject.

When the distance information is "far", the light guide L1 and the light guide L2 are "blue". When the distance information is "appropriate distance", the light guide L1 is "green" and the light guide L2 is "brown". "Brown" is an example of a light emission mode that is easily visually recognized by a color-weak person. When the distance information is "near", the light guide L1 and the light guide L2 are "red". When the distance information is "no hand", the light guide L1 and the light guide L2 are "white".

For example, when the user of rank 1 in Fig. 12 is selected as the candidate for the authentication subject, the light guide L2 is selected because the attribute information of the user is color-weak. Thus, when the distance information is "appropriate distance", "brown" is selected as the light emission mode.

In this case, the light emitting unit 813 emits brown light. Even an authentication subject who finds it difficult to distinguish between "green" and "red" can easily distinguish between "brown" and "red". Thus, it is possible to correctly feed back the distance from the sensor unit 811 to the palm to the color-weak authentication subject.

The light guide illustrated in Figs. 13 and 17 is merely an example, and the light guide L2 of Fig. 17 may be used as the light guide L2 of Fig. 13, and the light guide L2 of Fig. 13 may be used as the light guide L2 of Fig. 17. In the light guide L2 of Fig. 17, another color that can be easily distinguished from "red" by the color-weak authentication subject may be used instead of "brown". A light emission mode in which the emission color, the intensity of light, the light emission time, and the like are variously changed according to the distance value or the distance information may be used as the light guide L2.

The biometric authentication device 801 and the biometric authentication device 1601 can output information for guiding the palm of the authentication subject using not only the light output from the light emitting unit 813 but also sound, a text message, a voice message, and the like.

In this case, the type and change pattern of information desired by each person are used as the attribute information included in the registered attribute information 923 of each person. The type of information indicates any one of light, sound, text message, voice message, and the like, and the change pattern of information indicates a change of the information corresponding to the distance value or distance information. The control unit 915 determines the output mode of the information according to the attribute information selected from the candidate list 925 and the distance value or distance information.

The configuration of the information processing device 501 of Fig. 5 is merely an example, and some components may be omitted or changed according to the application or condition of the information processing device 501. The configuration of the biometric authentication system of Fig. 7 is merely an example, and some components may be omitted or changed according to the application or condition of the biometric authentication system. The configurations of the biometric authentication device 801 of Fig. 8 and the biometric authentication device 1601 of Fig. 16 are merely examples, and some components may be omitted or changed according to the application or condition of the biometric authentication system.

The configuration of the server 703 of Fig. 9 is merely an example, and some components may be omitted or changed according to the application or condition of the biometric authentication system. For example, the registered face information 921, the registered vein information 922, and the registered attribute information 923 may be stored in a database outside the server 703. In this case, the server 703 acquires the registered face information 921, the registered vein information 922, and the registered attribute information 923 from the external database, and stores them in the storage unit 917.

The flowcharts of Figs. 6, 14, and 15 are merely examples, and some processing may be omitted or changed according to the configuration or condition of the information processing device 501 or the biometric authentication system.

The biometric authentication device illustrated in Figs. 1 and 2 is merely an example, and a biometric authentication device having another configuration may be used. The light guide illustrated in Figs. 3, 4, 13, and 17 is merely an example, and light guide in another light emission mode may be used.

The two distance sensors illustrated in Figs. 10 and 11 are merely examples, and the number of external distance sensors may be one, or three or more. The candidate list 925 illustrated in Fig. 12 is merely an example, and the candidate list 925 changes according to the registered face information 921 and the face image 924.

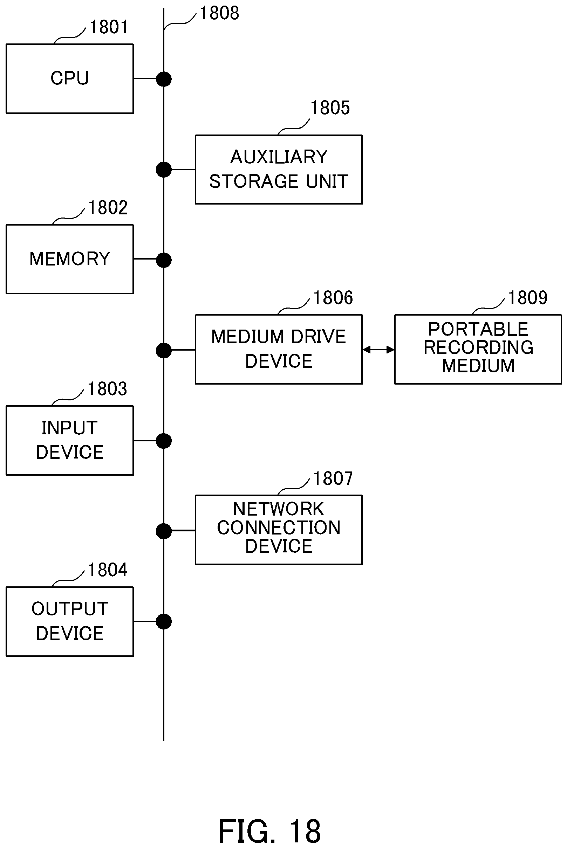

Fig. 18 illustrates a hardware configuration example of an information processing device used as the information processing device 501 of Fig. 5 and the server 703 of Fig. 9. The information processing device of Fig. 18 includes a central processing unit (CPU) 1801, a memory 1802, an input device 1803, an output device 1804, an auxiliary storage device 1805, a medium drive device 1806, and a network connection device 1807. These components are hardware and are connected to each other by a bus 1808.

The memory 1802 is, for example, a semiconductor memory such as a read only memory (ROM), a random access memory (RAM), or a flash memory, and stores a program and data used for processing. The memory 1802 may operate as the storage unit 917 of Fig. 9.

The CPU 1801 (processor) operates as the extraction unit 511, the control unit 512, and the authentication unit 513 of Fig. 5, for example, by executing a program using the memory 1802. The CPU 1801 also operates as the face feature extraction unit 912, the vein feature extraction unit 913, the face authentication unit 914, the control unit 915, and the vein authentication unit 916 of Fig. 9 by executing a program using the memory 1802.

The input device 1803 is, for example, a keyboard, a pointing device, or the like, and is used for inputting an instruction or information from an operator. The output device 1804 is, for example, a display device, a printer, a speaker, or the like, and is used for making an inquiry to the operator or outputting a processing result. The processing result may be the authentication result 926.

The auxiliary storage device 1805 is, for example, a magnetic disk device, an optical disk device, a magneto-optical disk device, a tape device, or the like. The auxiliary storage device 1805 may be a flash memory or a hard disk drive. The information processing device can store the program and data in the auxiliary storage device 1805 and load them into the memory 1802 to use them. The auxiliary storage device 1805 may operate as the storage unit 917 of Fig. 9.

The medium drive device 1806 drives a portable recording medium 1809 and accesses recorded contents. The portable recording medium 1809 is a memory device, a flexible disk, an optical disk, a magneto-optical disk, or the like. The portable recording medium 1809 may be a compact disk read only memory (CD-ROM), a digital versatile disk (DVD), a universal serial bus (USB) memory, or the like. The operator can store the program and data in the portable recording medium 1809 and load them into the memory 1802 to use them.

As described above, the computer-readable recording medium that stores the program and data used for processing is a physical (non-transitory) recording medium such as the memory 1802, the auxiliary storage device 1805, or the portable recording medium 1809.

The network connection device 1807 is a communication interface circuit that is connected to the communication network 704 of Fig. 7 and performs data conversion accompanying communication. The information processing device can receive the program and data from the external device via the network connection device 1807 and load them into the memory 1802 to use them. The network connection device 1807 may operate as the communication unit 911 of Fig. 9.

Note that the information processing device does not need to include all the components of Fig. 18, and some components can be omitted according to the application or condition. For example, when an interface with the operator is unnecessary, the input device 1803 and the output device 1804 may be omitted. When the information processing device does not use the portable recording medium 1809, the medium drive device 1806 may be omitted.

Although the disclosed embodiments and their advantages have been described in detail, those skilled in the art will be able to make various changes, additions, and omissions without departing from the scope of the invention as clearly set forth in the claims.

## Claims

1. An authentication method of executing, by a computer, a process comprising:
extracting one or more registrants from among a plurality of registrants based on first biometric information detected by a first sensor;
acquiring attribute information associated with each of the one or more registrants from among attribute information associated with each of the plurality of registrants;
outputting information in a mode corresponding to the attribute information associated with each of the one or more registrants; and
performing authentication for second biometric information detected by a second sensor according to output of the information by using the second biometric information and registered biometric information associated with each of the one or more registrants.

2. The authentication method according to claim 1, wherein
the computer further executes a process of identifying any one of attribute information among the attribute information associated with each of the one or more registrants based on similarity between the first biometric information and first registered biometric information associated with each of the one or more registrants, and
the outputting the information includes a process of outputting the information in a mode corresponding to the any one of attribute information.

3. The authentication method according to claim 2, wherein
the attribute information associated with each of the plurality of registrants is information indicating color vision of each of the plurality of registrants, and the mode corresponding to the any one of attribute information is a light emission mode of a light emitting unit.

4. The authentication method according to claim 3, wherein
when the any one of attribute information is information indicating color weakness, the mode corresponding to the any one of attribute information is a light emission mode that is easily visually recognized by a color-weak person.

5. The authentication method according to any one of claims 2 to 4, wherein
the computer further executes a process of acquiring a distance between the second sensor and an authentication subject, and
the outputting the information includes a process of outputting the information in a mode corresponding to the any one of attribute information and the distance.

6. The authentication method according to any one of claims 1 to 5, wherein
the second sensor is a vein sensor.

7. A control method of executing, by a computer, a process comprising:
acquiring a distance between a biometric sensor and a biological body;
determining a light emission mode of a light emitting unit based on the distance; and
controlling the light emitting unit based on the light emission mode.

8. An information processing device comprising:
an extraction unit configured to extract one or more registrants from among a plurality of registrants based on first biometric information detected by a first sensor and acquire attribute information associated with each of the one or more registrants from among attribute information associated with each of the plurality of registrants;
a control unit configured to perform control for outputting information in a mode corresponding to the attribute information associated with each of the one or more registrants; and
an authentication unit configured to perform authentication for second biometric information detected by a second sensor according to output of the information by using the second biometric information and registered biometric information associated with each of the one or more registrants.

9. The information processing device according to claim 8, wherein
the control unit identifies any one of attribute information among the attribute information associated with each of the one or more registrants based on similarity between the first biometric information and first registered biometric information associated with each of the one or more registrants, and performs control for outputting the information in a mode corresponding to the any one of attribute information.

10. The information processing device according to claim 9, wherein
the attribute information associated with each of the plurality of registrants is information indicating color vision of each of the plurality of registrants, and the mode corresponding to the any one of attribute information is a light emission mode of a light emitting unit.

11. The information processing device according to claim 10, wherein
when the any one of attribute information is information indicating color weakness, the mode corresponding to the any one of attribute information is a light emission mode that is easily visually recognized by a color-weak person.

12. An authentication program that causes a computer to execute a process comprising:
extracting one or more registrants from among a plurality of registrants based on first biometric information detected by a first sensor;
acquiring attribute information associated with each of the one or more registrants from among attribute information associated with each of the plurality of registrants;
outputting information in a mode corresponding to the attribute information associated with each of the one or more registrants; and
performing authentication for second biometric information detected by a second sensor according to output of the information by using the second biometric information and registered biometric information associated with each of the one or more registrants.

13. The authentication program according to claim 12, wherein
the authentication program causes the computer to further execute a process of identifying any one of attribute information among the attribute information associated with each of the one or more registrants based on similarity between the first biometric information and first registered biometric information associated with each of the one or more registrants, and
the outputting the information includes a process of outputting the information in a mode corresponding to the any one of attribute information.

14. The authentication program according to claim 13, wherein
the attribute information associated with each of the plurality of registrants is information indicating color vision of each of the plurality of registrants, and the mode corresponding to the any one of attribute information is a light emission mode of a light emitting unit.

15. The authentication program according to claim 14, wherein
when the any one of attribute information is information indicating color weakness, the mode corresponding to the any one of attribute information is a light emission mode that is easily visually recognized by a color-weak person.
